# EUROPEAN PATENT SPECIFICATION

(11) **EP 1 834 726 B1**
(45) Date of publication and mention of the grant of the patent: **13.08.2008**
(21) Application number: 06380047.8
(22) Date of filing: 13.03.2006
(51) Int. Cl.: B23K 11/31, B23K 11/28

(54) **Electric resistance welding gun**
Elektrische Widerstandsschweisszange
Pince de soudage électrique par résistance

(43) Date of publication of application: 19.09.2007
(73) Proprietor: SERRA SOLDADURA, SA, 08040 Barcelona (ES)
(72) Inventor: Fustel Gascon, Alfredo Serra Soldadura, SA, 08040 Barcelona (ES)
(74) Representative: Gislon, Gabriele

(56) References cited:
- ES-U- 1 055 232
- US-A- 4 504 725
- US-A- 5 063 278
- US-A- 5 111 020

## Description

### Technical field

The present invention relates to an electrical resistance welding gun, especially for spot welding, of the type comprising a passive arm holding a first electrode and a moving arm holding a second electrode, wherein the moving arm is mounted to pivot with respect to the fixed arm in order to close and open the welding gun.

### Background of the invention

A type of electrical resistance welding gun is known comprising a pair of electrode-holding arms, one of which is passive and remains fixed in place with respect to a base support during the welding operation and the other is active and is mounted to pivot about a rotation axis with respect to the passive arm. A main pneumatic cylinder has a casing connected to an extension of the passive arm and a rod connected to the active arm, so that operation of said main pneumatic cylinder causes the active arm to pivot between an open position, in which a tip of the electrode on the active arm is separated from a tip of the electrode on the passive arm, and a closed position, in which said tip of the electrode on the active arm is able to press a work piece against said tip of the electrode on the passive arm in order to perform a welding operation. The welding gun includes a transformer connected to electric power supply means adapted to provide a welding current to the electrodes when the active arm is in said closed position.

Document ES-A-1055232 describes a welding gun of the type described above, in which the passive arm is mounted so that it can also rotate a certain angle about the mentioned rotation axis and a secondary pneumatic cylinder has a casing connected to the base support and a rod connected to the passive arm. Operation of said secondary pneumatic cylinder produces a certain pivoting of the assembly formed by both passive and active arms without altering the relative position between them, which enables compensation of the welding gun position at the moment of closing for welding. The main pneumatic cylinder has a double piston that allows an approach run and a short total closing and pressure run to perform the welding. However, the maximum aperture reached between electrodes, even after an opening run of both pistons, is limited and it only allows overcoming small obstacles existing on the parts to be welded between the base support of the welding gun and the electrodes.

Document ES-A-1043749 describes an electrical resistance welding gun, the general structure of which is similar to that described in the previously cited document ES-A-1055232, with the difference that here, each of the two arms has a proximal portion formed by two plates facing each other, with a plurality of aligned holes adapted for the installation of fixing screws for securing a distal portion of the respective arm. The multiplicity of such holes permits selectively mounting arms of different lengths and working depths, although the maximum opening angle remains unvaried. To a certain extent, this construction contributes to overcoming obstacles, in that for equal opening angles the maximum gap between the electrodes is increased. However, the maximum opening angle is limited.

The welding guns of the two previously cited documents are adapted to be manipulated by a robot. For this reason, the base body is coupled to an arm or moving member of the robot and the welding gun is connected to a control unit associated with said robot so that it executes an automatic welding gun handling program, including automatic command of positioning, closing, welding and opening operations.

Patent ES-A-2215009 describes a welding gun of the type described above, which is adapted to be manually handled. To this end, the base body of the welding gun is linked to a counter-weighted suspension system that permits manual vertical movements of the welding gun with a moderate effort. Moreover, the suspension system permits movements of the welding gun in at least one horizontal direction and rotation of the welding gun about three orthogonal axes. One or more handles are connected to the base body of the welding gun, at least one of which including command elements for controlling welding operations. In general, this type of manually operated welding gun has the passive arm fixed with respect to the base support since any possible obstacles on the parts to be welded are easily dealt with by manually manipulating the welding gun. However, the maximum opening angle is limited.

Patent JP-A-63299866 describes an electrical resistance welding gun that comprises a base support and a lower arm that is pivotingly supported on the base support by a first articulation pin. A link is pivotingly supported on said lower arm by a second articulation pin and the casing of a pneumatic cylinder is pivotingly supported on said lower arm by a third articulation pin. An upper arm is pivotingly connected at the end of the cylinder rod by means of a fourth articulation pin. In addition, a fifth articulation pin, which is inserted into a first elongated hole formed in the link, and a sixth articulation pin, which is inserted in a second elongated hole formed in the link and can fit into a cradle formed in the base, are mounted on the upper arm. The sixth pin is located close to the fourth pin and the second articulation pin is located in an intermediate area between the electrode on the upper arm and the fourth pin. When the cylinder is activated, the force exerted by the rod on a first portion of its travel presses the link upwards via the fifth and sixth pins, which rotates the upper arm about the sixth pin while the same remains fitted into the cradle and the fifth pin is moved along the length of the first elongated hole. During a subsequent second portion of the rod travel, the upper arm and the link integer into each other and rotate together about the second articulation pin, moving the sixth pin along the length of the third elongated hole and out of the cradle to close the welding gun and perform a welding operation.

With the mechanism of the cited Japanese patent, a significantly large maximum open angle can be achieved. However, the mechanism employed is very complex compared to the welding guns commonly used in the industry. For example, in order to movably couple the active arm to the base support, there is a kinematic chain that includes up to four articulation pins, two of which sliding in corresponding elongated holes, in addition to the two articulation pins that connect the cylinder casing and rod with the passive and active arms respectively. The large number of articulations, together with the relatively large forces to which they are subjected makes the mechanism prone to play and/or maladjustments appearing that could lead to imprecise welding operations. Moreover, because of its complexity, this welding gun could likely to be costly in both manufacturing and maintenance.

### Disclosure of the invention

One object of the present invention is to provide an electric resistance welding gun provided with closing and opening movements between open and closed positions to perform normal spot welding operations, and additional extra-opening movements between said open position and an extra-open position in order to perform a positioning of the welding gun capable of overcoming relatively large obstacles in the pieces to be welded.

The present invention contributes to attain the previous and other objects by providing an electrical resistance welding gun comprising in combination a base support, a passive arm holding a first electrode, said passive arm being mounted on said base support; an active arm holding a second electrode, said active arm being mounted to pivot about a pivot shaft with respect to the passive arm; a first linear actuator having an extendible rod connected to the active arm by means of a first articulation pin, said linear actuator being operable to pivot the active arm about said pivot shaft between an open position and a closed position; electrical power supply means adapted to provide a welding current to the first and second electrodes when the active arm is in said closed position; guiding means to guide a movement of the pivot shaft with respect to the passive arm along a curved path having its centre at said first articulation pin when said extendible rod of the first linear actuator is in a retracted position; and a second linear actuator having an extendible rod connected to the active arm by means of a second articulation pin, said second linear actuator being operable to pivot the active arm about the first articulation pin while moving the pivot shaft along said guiding means between said open and extra-open positions.

With this simple and robust construction, the active arm pivots on the pivot shaft to carry out closing and opening operations for welding under the action of the first linear actuator, as it would do in most of the prior art welding guns. But in addition, the active arm is able to pivot about the first articulation pin provided between the active arm and the rod end of the first linear actuator under the action of the second linear actuator in order to open the welding gun to an extra-open position. This involves displacement in the position of the pivot shaft. For this, the mentioned guiding means are provided along which the pivot shaft may be moved when the active arm shifts from the open position to the extra-open position and vice versa. The welding gun preferably incorporates retaining means operated by actuators to secure the position of the pivot shaft during the closing and opening operations for welding.

The welding gun in accordance with the present invention can be adapted for manual or robotic operation. In the welding gun adapted for manual operation, the passive arm is fixed with respect to the base support and the casings of the first and second linear actuators are connected either to the base support or to the passive arm, which form a same structure, by means of respective articulation shafts. In the welding gun adapted for manual operation, the passive arm is mounted to pivot about the pivot shaft with respect to the base support and a third linear actuator, or compensation actuator, is installed between the passive arm and the base support in order to produce small rotations of the passive arm with respect to the base support. The casings of the first and second linear actuators are connected to the passive arm by means of respective articulation shafts so that the rotation of the passive arm driven by the third linear actuator is produced without altering the relative positions of the active and passive arms. These small rotations of the passive arm are used to rectify the welding gun position when it closes for welding operation depending on which of the two electrodes first makes contact with the pieces to be welded so as to avoid deformation in the pieces to be welded caused by the movements of the electrodes. In the welding gun adapted for manual operation, these small rotations of the passive arm are not necessary because the welder operates the welding gun so that the passive arm makes first contact and then orders for the active arm to close.

Throughout this description, the term "passive arm" is used to designate that of the two arms of the welding gun that at the moment of welding, i.e. when one electrode is pressed against the other with interposition of the pieced to be welded while a welding current is applied, remains fixed with respect to the base support and acts as an anvil or backing plate, although in some welding gun types adapted for robotic operation the third linear actuator can make small corrections to the passive arm position with respect to the base support immediately before or during welding to prevent deformation in the pieces to be welded. The term "active arm" is used to designate the other of the two arms of the welding gun, which is pushed towards the passive arm with respect to the base body during welding.

Thus, in addition to the habitual closing and opening welding movements between an open position prior to welding, and a closed welding position, the welding gun of the present invention also permits extra-open movements in order to facilitate a positioning of the welding gun overcoming relatively large obstacles located on the pieces to be welded between the electrodes and the base support. Moreover, this extra-open possibility is achieved in a relatively simple manner, without compromising welding gun robustness and precision, especially during welding operations.

### A brief description of the drawings

The above and other advantages and features will be more fully understood from the following detailed description of exemplary embodiments with reference to the accompanying drawings, in which:
Figs. 1, 2 and 3 are side elevation views of an exemplary embodiment of the electrical resistance welding gun of the present invention adapted for manual operation, in open, closed and extra-open positions, respectively;
Fig. 4 is a cross-sectional view taken through plane IV-IV of Fig. 1;
Fig. 5 is a perspective view illustrating the operation of retaining means not shown in Figs. 1 to 3;
Fig. 6 is a cross-sectional view of said retaining means; and
Figs. 7, 8 and 9 are schematic side elevation views of another exemplary embodiment of the electrical resistance welding gun of the present invention adapted for robotic operation, in open, closed and extra-open positions respectively.

### Detailed descriptions of the exemplary embodiments

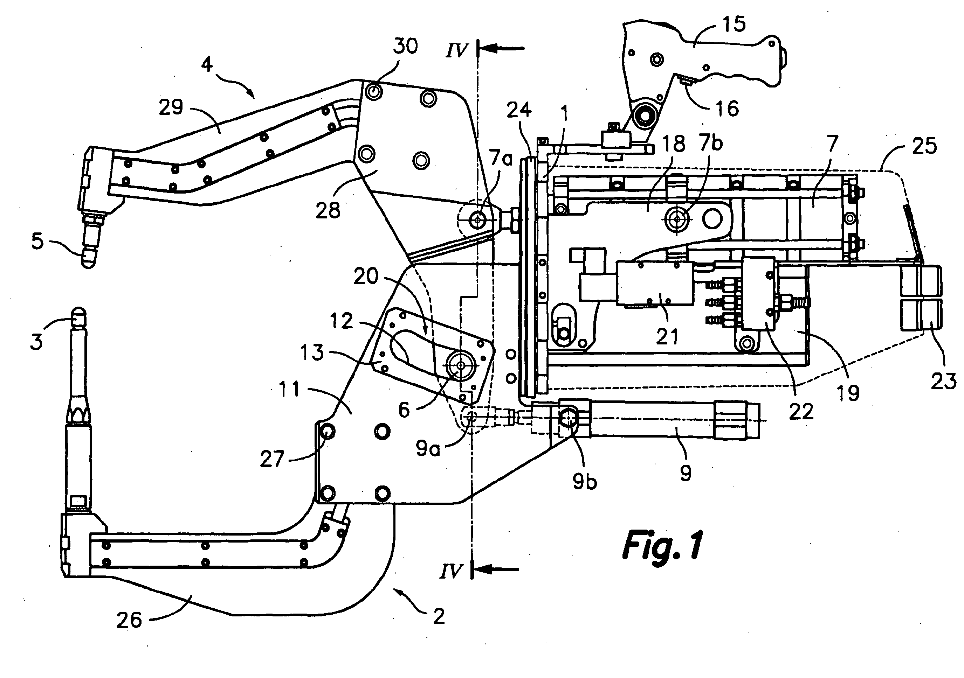

First referring to Figs. 1 to 3, these show an electrical resistance welding gun in accordance with an exemplary embodiment of the present invention that is adapted for manual operation. The welding gun comprises a base support 1, a passive arm 2 that carries a first electrode 3 and an active arm 4 that carries a second electrode 5. The mentioned passive arm 2 is fixed to said base support 1 so that the base support 1 and the passive arm 2 form a same structure. The mentioned active arm 4 is mounted to pivot about a pivot shaft 6 with respect to the passive arm 2. A first liner actuator 7 has an extendible rod connected to the active arm 4 by a first articulation pin 7a and a casing connected to an appendix 18 forming part of the base support 1 by means of a first articulation shaft 7b, and the pivot shaft 6 is associated with guiding means 20 adapted to guide movement of the pivot shaft 6 with respect to the passive arm 2 in a curved path having its centre at said first articulation pin 7a when said extendible rod of the first linear actuator 7 is in a retracted position. Consequently, when the extendible rod of the first linear actuator 7 is in said retracted position (shown in Fig. 1) the active arm 4 is able to pivot about the first articulation pin 7a. A second linear actuator 9 has an extendible rod connected to the active arm 4 by means of a second articulation pin 9a and a casing connected to the passive arm 2 by means of a second articulation shaft 9b. Alternatively, the casing of the second linear actuator 9 could be connected to the base support 1 and/or the casing of the first linear actuator 7 could be connected to the passive arm 2 with an equivalent result, since the base support 1 and the passive arm 2 are mutually attached.

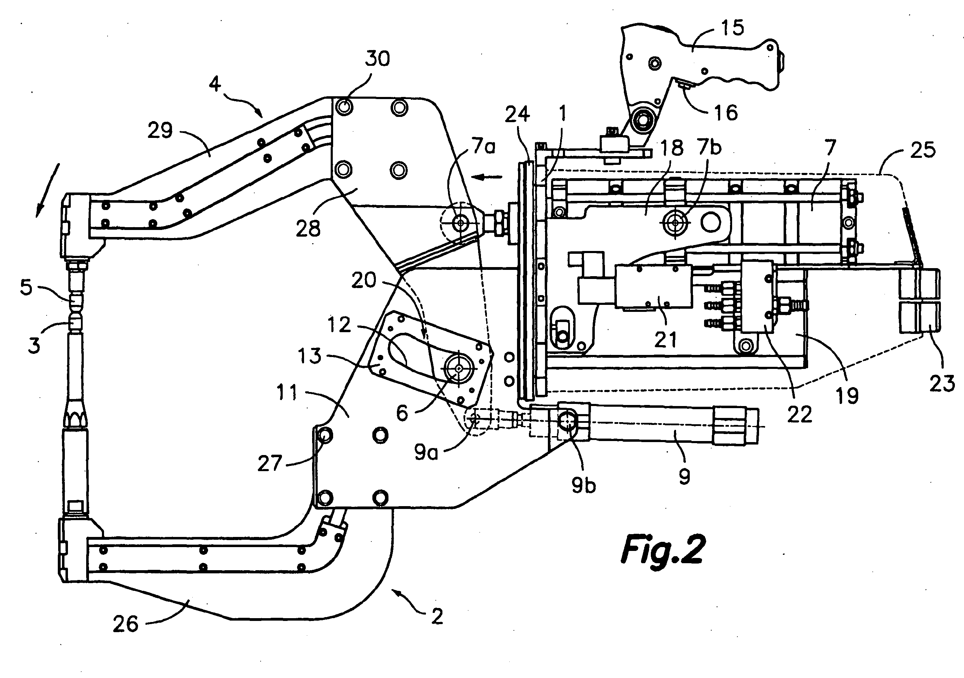

The position of the passive and active arms 2, 4, shown in Fig. 1, is a neutral open position, ready to carry out closing and opening operations for spot welding. An action of the first linear actuator 7 for extending its rod from the position shown in Fig. 1 to the position shown in Fig. 2 makes the active arm 4 to pivot about said pivot shaft 6 from said open position to a closed position. In this closed position, shown in Fig. 2, the continued force of the first linear actuator 7 is transmitted to the second electrode 5, which exerts considerable pressure on pieces to be welded (not shown) supported on the first electrode 3, which acts as an anvil or backing plate. The welding gun is fitted with electrical power supply means adapted to provide a high intensity welding current to the first and second electrodes 3, 5 when the active arm 4 is in the closed position shown in Fig. 2. The mentioned electrical power supply means include a transformer 19 installed on the support base 1, as well as a connection port for connection to an external electrical power supply and a corresponding wiring (not shown). Subsequent action of the first linear actuator 7 in an opposite direction to take its rod to the retracted position makes the active arm 4 to pivot about the pivot shaft 6 from the closed position shown in Fig. 2 again to the neutral open position, shown in Fig. 1.

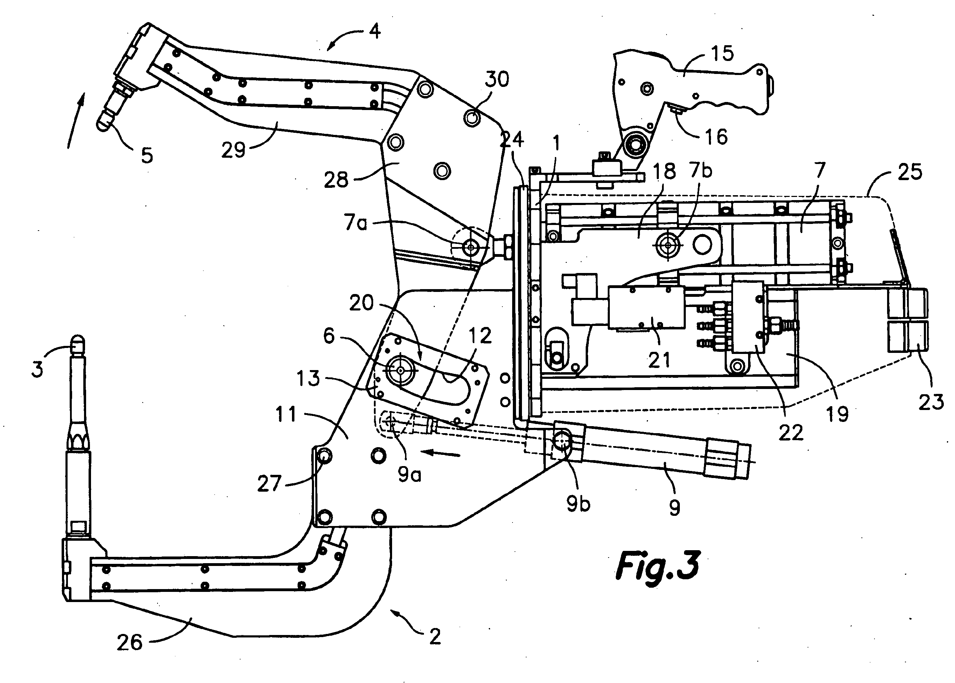

From the neutral open position of the passive and active arms 2, 4 shown in Fig. 1, an action of the second linear actuator 9 to extend its rod makes the active arm 4 to pivot about the first articulation pin 7a, moving the pivot shaft 6 along said guiding means 20 between the open position shown in Fig. 1 and an extra-open position shown in Fig. 3. A subsequent action of said second linear actuator 9 to retract its rod makes the active arm 4 to pivot about the first articulation pin 7a again to the neutral open position shown in Fig. 1, thus moving the pivot shaft 6 along said guiding means 20 again to the position adequate to act as the pivot shaft for the closing and opening operations for welding.

In the exemplary embodiment shown in Figs. 1 to 3, the first and second linear actuators 7, 9 are pneumatic cylinders connected to a pressurised air source through a connection port and a piping (not shown) and valve 21 systems. The pneumatic cylinder constituting the first linear actuator 7 comprises various axially coupled segments to provide a relatively short rod stroke with a comparatively large force, while the pneumatic cylinder constituting the second linear actuator 9 is a simple cylinder with a relatively small diameter and relatively large stroke. However, for the purposes of the present invention, the first and second linear actuators 7, 9 could be of any other type, for example, an electric motor with a rod driven by a ball screw. As is conventional, the rod also incorporates an arm cooling system including a fluid circuit, generally water, with a branch for cold fluid and a return branch for hot fluid. Both branches of this fluid circuit are connected to an external fluid supply and evacuation system via corresponding connection ports, piping (not shown), and corresponding distributor and collector manifolds 22.

The base body 1 is coupled to a conventional suspension system, which is generally adapted to permit movements of the welding gun in a vertical direction and at least one horizontal direction, and rotation of the welding gun about three orthogonal axes. This suspension system is fixed to a ring 24 mounted so that it can rotate about the base support 1. The base body 1 is fitted with at least one handle 15 by means of which the operator manually operates the welding gun.

The mentioned handle 15 includes control members 16 to control the closing, opening and extra-opening welding operations. To this end, the welding gun includes electrical wiring between said control members 16, said valves 21, which are operated by, for example, a solenoid, and a connection port for connection to an external electrical power source. Most of the driving and control members, wiring, piping, etc., are covered by a removable hood 25 (represented by the broken lines in Figs. 1 to 3). All connection ports are accessible from the outside through a fairleader assembly 23 fitted to an aperture in said hood 25.

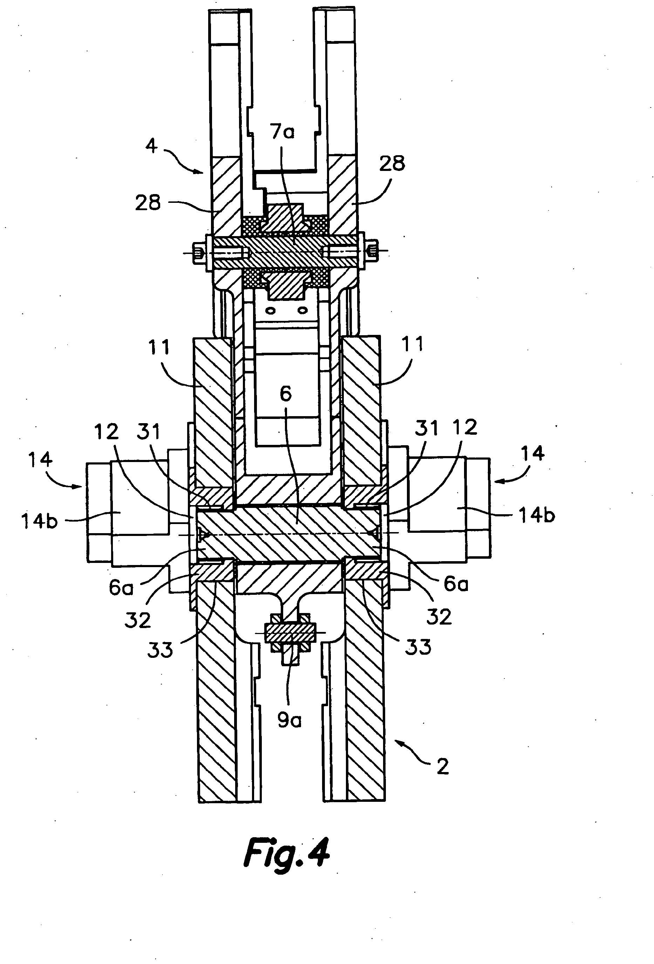

The passive arm 2 comprises a proximal portion formed from two first separate, parallel plates 11 secured to the base support 1 (see Fig. 4), and a solid distal portion 26, on which the first electrode 3 is mounted. The mentioned distal portion 26 has one end placed between the two first plates 11 of the proximal portion and fixed thereto by securing nut and bolt assemblies 27 inserted through respective aligned holes. In a similar fashion, the active arm 4 comprises a proximal portion that defines two second separate, parallel plates 28 (see also Fig. 4), and a solid distal portion 29, on which the second electrode 5 is mounted. The mentioned distal portion 29 of the active arm 4 has one end placed between the two second plates 28 of the proximal portion and fixed to the same by securing nut and bolt assemblies 30 inserted through respective aligned holes.

As shown in Figs. 1 to 3 and in Fig. 4, in each of said first plates 11 of the proximal portion of the passive arm 2 there is an elongated hole 12, where both elongated holes 12 are equal and mutually facing each other and adapted to receive corresponding ends 6a of the pivot shaft 6. These elongated holes 12 constitute the mentioned guiding means 20 for the movements of pivot shaft 6. To this end, needle bearings 31 adapted to rotate over inner walls of said elongated holes 12 are installed on said ends 6a of the pivot shaft 6. In other words, said inner walls of the elongated holes 12 act as rolling tracks for the mentioned needle bearings 31. To this end, although the elongated holes 12 can be directly formed in the first plates 11, it is preferred for the elongated holes 12 to be formed in respective supplementary parts 32, with at least one portion thereof fitting into corresponding openings 33 formed in the first plates 11 and fixed to the first plates 11 for example by screws. These supplementary parts 13 are made of tempered steel and are machined an eventually treated to withstand any possible pressure exerted by the needle bearings 31.

Although theoretically, due to the particular geometric layout, the pivot shaft 6 cannot be moved inside the elongated holes 12 when the rod of the first linear actuator 12 is extended to pivot the active arm 4 from its open position shown in Fig. 1 to the closed position, shown in Fig. 2, in practice, a certain amount of undesired movement occurs due to dimensional tolerances. In order to prevent this, the present invention comprises retaining means adapted to retain the pivot shaft 6 in a suitable fixed position to act as a pivot shaft for pivoting the active arm 4 between the open and closed positions during the closing and opening operations for welding. The cited retaining means comprise a pair of retaining parts 13 adapted to be lodged inside the respective elongated holes 12.

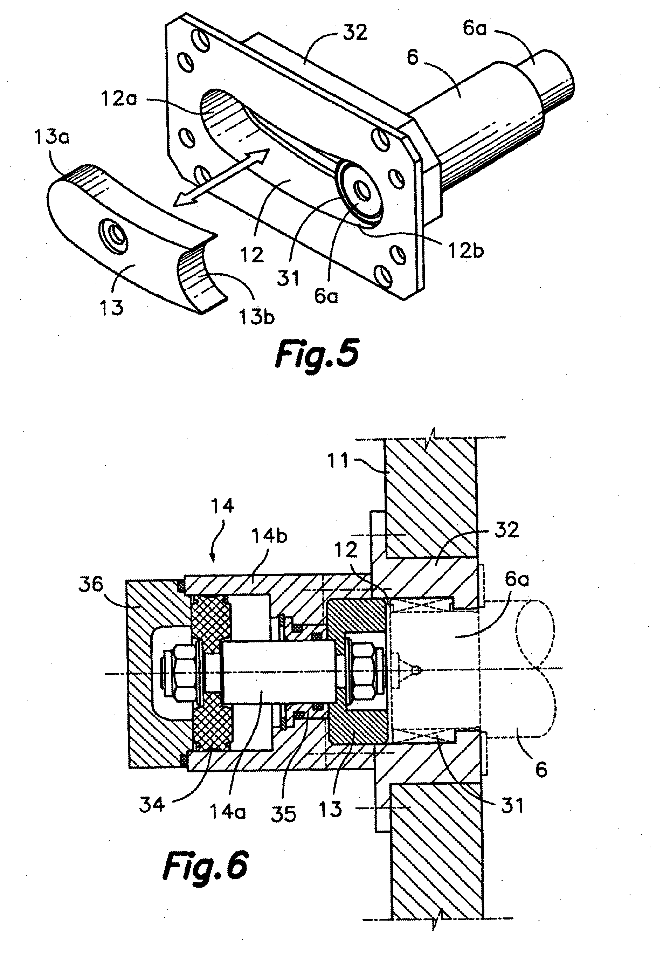

Fig. 5 illustrates one of the mentioned supplementary parts 32 having the corresponding elongated hole 12 formed therein, the pivot shaft 6 with one end 6a inserted inside said elongated hole 12 and one of said retaining parts 13 arranged to be inserted inside the elongated hole 12. The corresponding needle bearing 31 is mounted on the end 6a of the pivot shaft 6. The other supplementary part 32 and the other retaining part 13 (not shown) are identical to those shown in Fig. 5 and descriptions thereof are omitted.

The elongated hole has two parallel, facing, curved inner walls, which are connected by two inner, rounded end walls 12a, 12b. The distance between said two parallel, curved inner walls is nominally equal to the outside diameter of the needle bearings 31 and the radius of said inner, rounded end walls 12a, 12b is nominally equal to the outside radius of the needle bearings 31. The retaining part 13 is adapted to retain the end 6a of the pivot shaft 6 against one of the end walls 12a, 12b of the elongated hole 12 (the second end wall 12b to the right of the elongated hole 12 in Fig. 5). To this end, the retaining part 13 comprises a first end 13a adapted to make contact with said first wall end 12a of the elongated hole 12 and a configuration 13b adapted to cooperate with the second end wall 12b of the elongated hole 12 in retaining the pivot shaft 6 in said fixed position. For this reason, the mentioned configuration 13b of the retaining part 13 defines a curved wall with a radius is nominally equal to the outside radius of the needle bearing 31 and a centre aligned with the centre of the pivot shaft 6 when the same is in a fixed position against the second wall end 12b of the elongated hole 12. Thus, when the retaining parts are inserted inside the elongated holes 12, the ends 6a of the pivot shaft 6 are held in position and the configurations 13b of the retaining parts 13 act as part of the rolling tracks for the needle bearings 31, while the end walls 12b of the elongated holes 12 act as another part of the rolling tracks for the needle bearings 31 in order to guide the pivoting of the active arm 4 about the pivot shaft 6, during closing and opening movements for welding as described above. When the retaining parts 13 are removed from the corresponding elongated holes 12, the ends 6a of the pivot shaft 6 can be freely moved along the elongated holes 12 permitting pivoting movements of the active arm 4 about the first articulation pin 7a during the movements between the previously described open and extra-open positions.

In order to automatically perform the movements of the retaining parts 13, the welding gun includes two retention actuators 14, exteriorly shown in Fig. 4.

As shown in Fig. 6, each of the mentioned retention actuators 14 has a casing 14b that is fixed with respect to a corresponding one of the first plates 11 of the passive arm 2. In the exemplary embodiment illustrated in Figs. 1 to 6, the retention actuators 14 are expressly adapted for a maximum compactness and are fixed to the corresponding supplementary parts 32 which, in turn, are secured to the corresponding first plates 11 of the passive arm 2. The casing 14b of each retention actuator 14 defines a chamber containing a piston 34 and an extendible rod 14a is connected at one end to said piston 34 and at the other to the corresponding retaining part 13. A leak-tight seal 35 ensures sliding of the rod 14a through a corresponding opening without any air leaks, and a cylinder head 36 closes the opposite end of said chamber. However, for the purpose of the present invention, the retention actuators 14 can comprise any other type of commercially available pneumatic cylinder or electric motors, with the sole condition that they can carry out the mentioned movements of the retaining parts 13. One movement of the retention actuators 14 to extend the rod 14a produces the insertion of the retaining parts 13 into the respective elongated holes 12. One movement of the retention actuators 14 in the opposite direction extracts the retaining parts 13 from the elongated holes 12.

It can be seen from Fig. 6 that when the rod 14a of retention actuator 14 is in the retracted position, the retaining part 13 still has a small portion inserted in the elongated hole 12, without, however, causing any interference with the end 6a of the pivot shaft 6 (shown in broken lines in Fig. 6), which is slightly recessed with respect to the mouth of the elongated hole 12. This small portion of the retaining part 13 inserted in the elongated hole 12 ensures positioning of the retention actuator 14 during installation and smooth insertion and removal movements of the retaining part 13 in the elongated hole 12.

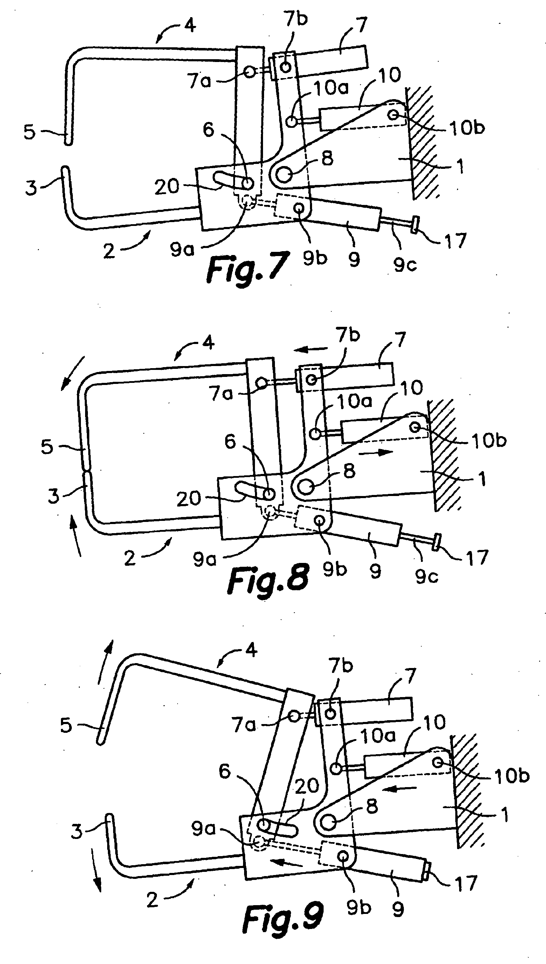

Another exemplary embodiment of the electrical resistance welding gun of the present invention adapted for robotic operation will be described below with reference to Figs. 7 to 9. The welding gun of Figs. 7 to 9 comprises, as for the exemplary embodiment previously described with respect to Figs. 1 to 3, a base support 1, a passive arm 2, and an active arm 4 to which a pivot shaft 6 is connected which, in turn is coupled to rotation means 20 associated with the passive arm 2. However, the passive arm 2 is here mounted to pivot about a second pivot shaft 8 with respect to the base support 1. The first linear actuator 7 has an extendible rod 7a connected to the active arm 4 by means of a first articulation pin 7a and a casing connected to the passive arm 2 by means of a second articulation shaft 7b. The second linear actuator 9 has an extendible rod 9a connected to the active arm 4 by means of a second articulation pin 9a and a casing connected to the passive arm 2 by means of a second articulation shaft 9b. In accordance with this exemplary embodiment, the welding gun also comprises a third linear actuator 10 with an extendible rod connected to the passive arm 2 by a third articulation pin 10a and a casing connected to the base support 1 by means of a third articulation shaft 10b. The mentioned third linear actuator 10 can be operated to jointly pivot the passive 2 and active 4 arms about said second pivot shaft 8 without altering the relative position between the passive 2 and active 4 arms. The welding gun schematically illustrated in Figs. 7 to 9 is suitable for robotic operation. To this end, the base body 1 is coupled to a moving member of the robot (not shown) and the welding gun is connected to a control unit associated with said robot to execute an automatic welding gun handling program including positioning and welding operations.

The welding gun is shown in Fig. 7 in a neutral open position, from which closing and opening movements for welding and extra-open movements for positioning can be performed. From the open position shown in Fig. 7, an action of the first linear actuator 7 to extend its rod 7a and an action of the third linear actuator 10 to retract its rod 10a produce pivoting of the passive and active arms 2, 4 about the second and first pivot shafts 8, 6 respectively, from the open position shown in Fig. 7 to the closed position, shown in Fig. 8, to perform a welding operation. A subsequent action of the first and third linear actuators 7, 10 in respective opposite directions return the welding gun to the open position shown in Fig. 7. Alternatively, from the neutral open position shown in Fig. 7, an action of the second linear actuator 9 to extend its rod 9a and an action of the third linear actuator 10 to retract its rod 10a produce pivoting of the passive and active arms 2, 4 about the second pivot shaft 8 and the first articulation pin 7a respectively, with a movement of the first pivot shaft 6 along the guiding means 20, from the open position shown in Fig. 7 to the extra-open position shown in Fig. 9 to carry out a welding gun positioning operation overcoming obstacles existing between the base support 1 and the point where the electrodes 3, 5 are going to perform the welding operation. A subsequent action of the second and third linear actuators 9, 10 in respective opposite directions return the welding gun to the open position shown in Fig. 7.

In the welding gun schematically illustrated in Figs. 7 to 9, a second linear actuator 9 is a double-rod type and comprises a second extendible rod 9c that projects from the cylinder head, i.e. the end of the casing opposite said extendible rod connected to the active arm 4 by said second articulation pin 9a. Both rods are mutually connected so that when the first one extends the second one retracts, and vice versa. A stop 17 is mounted on said second rod 9c, said stop 17 being associated with regulation means adapted to regulate and fix the position of said stop 17 long the second rod 9c, for example, using a nut and locknut arrangement (not shown), or any other device that would easily occur to an skilled in the art. Using these regulation means, the stop 17 can be fixed on the second rod 9c in such a position that, during an extra-open operation, the stop 17 makes contact with the cylinder head of cylinder 9 before the pivot shaft has reached the end of the guiding means 20 (for example, at the first end 12a of the elongated holes 12 in accordance with the exemplary embodiment shown in Fig. 5), thereby limiting and regulating the maximum angle permitted to the active arm 4 in said extra-open position. Obviously, the regulation means described with respect to the welding gun adapted for robotic operation shown in Figs. 7 to 9, including a double-rod type second linear actuator 9 and a stop 17 associated with the second rod 9c are as well applicable to the welding gun adapted for manual operation described with respect to Figs. 1 to 3.

Another significant feature of the welding gun of the present invention, either in its manual or robotic operating modality, is that it is prepared to be easily and simply adapted to the configuration of new pieces to be welded or to a change in application. To this end, as described above with respect to Figs. 1 to 3, distal portions 26, 29 of the passive and active arms 2, 4 are provided with ends located between the two parallel plates 11, 28 of the respective proximal portions and are fixed to the same by securing nut and bolt assemblies 27, 30 respectively. Consequently, this adaptation is achieved by simply removing the securing nut and bolt assemblies 27, 30 in order to replace only the distal portions 26, 29 by other ones suitable for the new configuration or application and then reinstalling the securing nut and bolt assemblies 27, 30, apart from, naturally, acting on the electric and cooling fluid connections. Obviously the new distal portions 26, 29 include the respective electrodes 3, 5 suitable for the new configuration or application.

It will be understood that the longer the distal portions 26, 29 of the passive and active arms 2, 4, the greater will be the maximum separation attained between the respective electrodes 3, 5 for the same extra-open angle and the smaller will be the closing force of electrode 5 of active arm 4 against the electrode 3 of the passive arm 2 for the same force exerted by the first linear actuator 7. The welding gun of the present invention provides a wide range of possible combinations of both parameters for adaptation to a variety of configurations or applications.

As a merely guideline example, a table is given below that lists various welding gun working depth dimensions provided by arms of various lengths, with the corresponding maximum gaps between electrodes reached between the maximum extra-open position and corresponding closing force between the electrodes for a welding gun such as that shown in Figs. 1 to 3, with the first pneumatic cylinder constituting the first linear actuator 7 working at a pressure of 6 bar. The working depth dimensions correspond to the distance normal to the first electrode 3 between the first electrode 3 and the pivot shaft 6 with the welding gun in the open or closed position shown in Figs. 1 and 2. The maximum gap between electrodes corresponds to the distance normal to the line that joins the tip of the first electrode 3 to the pivot shaft 6 between the tips of the first and second electrodes 3 and 5 when the welding gun is in the extra-open position shown in Fig. 3.

**Table**

| Relationships between working depth, maximum opening and closing force: | | |
|---|---|---|
| Working depth (mm) | Maximum gap (mm) | Approximate force (daN) |
| 400 | 221.0 | 950 |
| 500 | 274.1 | 875 |
| 600 | 327.7 | 800 |
| 700 | 381.6 | 710 |
| 800 | 435.8 | 640 |
| 900 | 490.2 | 555 |
| 1000 | 544.7 | 480 |
| 1100 | 593.3 | 300 |
| 1200 | 654.0 | 210 |

From the previous table, it can be seen that, in a welding gun in accordance with the present invention, such as that shown in Figs. 1 to 3, it is possible to install distal portions 26, 29 on the passive and active arms 2, 4 that are suitable for providing a working depth measurement of up to 1,200 mm, which provides a maximum extra-open aperture of 654 mm, with an appreciable force of 210 daN. It will be understood that a gap between electrodes of up to 1,200 mm is very significant and could be sufficient, for example, to overcome obstacles of the size of the wheel pitch on an automobile chassis on which one or more spots welds are to be made.

Those skilled in the art would be able to introduce variations and modifications to the described and illustrated exemplary embodiments without departing from the scope of the present invention as defined in the attached claims.

## Claims

1. An electrical resistance welding gun comprising in combination:
a base support (1);
a passive arm (2) holding a first electrode (3), said passive arm (2) being mounted on said base support (1);
an active arm (4) holding a second electrode (5), said active arm (4) being mounted to pivot about a pivot shaft (6) with respect to the passive arm (2);
a first linear actuator (7) having an extendible rod connected to the active arm (4) by means of a first articulation pin (7a), said linear actuator (7) being operable to pivot the active arm (4) about said pivot shaft (6) between an open position and a closed position;
electrical power supply means adapted to provide a welding current to the first and second electrodes (3, 5) when the active arm (4) is in said closed position;
guiding means (20) to guide movement of the pivot shaft (6) with respect to the passive arm (2) in a curved path having a centre at said first articulation pin (7a) when said extendible rod of the first linear actuator (7) is in a retracted position; and
a second linear actuator (9) having an extendible rod connected to the active arm (4) by means of a second articulation pin (9a), said linear actuator (9) being operable to pivot the active arm (4) about said first articulation pin (7a) while moving the pivot shaft (6) along said guiding means (20) between said open position and an extra-open position.

2. A welding gun in accordance with claim 1, **characterised in that** at least one proximal portion of the passive arm (2) with respect to the welding gun body is formed by two first plates (11), and said guiding means (20) comprise a pair of elongated holes (12), each elongated hole (12) being formed in one of said first plates (11), the elongated holes (12) being mutually facing and adapted to receive ends of the pivot shaft (6) inserted therein.

3. A welding gun in accordance with claim 2, **characterised in that** bearings (31) are provided installed at said ends of the pivot shaft (6) and adapted to roll on inner walls of said elongated holes (12).

4. A welding gun in accordance with claim 1, 2 or 3, **characterised in that** retaining means are provided adapted to retain the pivot shaft (6) in a fixed position suitable for acting as a pivot shaft for pivoting the active arm (4) between the open and closed positions.

5. A welding gun in accordance with claim 4, **characterised in that** said retaining means comprises a pair of retaining parts (13), each of said retaining parts (13) being adapted to be lodged inside one of the elongated holes (12), each retaining part (13) including a first end (13a) adapted to make contact with a first end (12a) of the corresponding elongated hole (12) and a configuration (13b) adapted to cooperate with a second end (12b) of the elongated hole (12) in retaining the pivot shaft (6) in said fixed position.

6. A welding gun in accordance with claim 5, **characterised in that** two retention actuators (14) are provided, each retention actuator (14) having a casing fixed to a corresponding one of the first plates (11) and an extendible rod (14a) connected to a corresponding one of the retaining parts (13), said retention actuators (14) being operable to insert said retaining parts (13) into the respective elongated holes (12) and to extract them therefrom.

7. A welding gun in accordance with claims 2 to 6, **characterised in that** said elongated holes (12) are formed in respective supplementary parts (32) fitted at least partly into corresponding apertures (33) in the first plates (11) and fixed to the first plates (11).

8. A welding gun in accordance with claim 7, **characterised in that** each of said retention actuators (14) has a casing fixed to one of said supplementary parts (32).

9. A welding gun in accordance with claim 1, **characterised in that** said second linear actuator (9) has a double-rod type actuator and comprises a second rod (9c) opposite to said extendible rod connected to the active arm (4) by said second articulation pin (9a), a stop (17) being mounted on said second rod (9c), regulation means being associated with said stop (17) to regulate the position of stop (17) along the second rod (9c) in order to regulate the maximum opening angle for the active arm (4) in said extra-open position.

10. A welding gun in accordance with any one of claims 1 to 9, **characterised in that** the passive arm (2) is fixed with respect to the base support (1), the first linear actuator (7) has a casing connected to the base support (1) by means of a first articulation shaft (7b), and the second linear actuator (9) has a casing connected to the base support (1) or to the passive arm (2) by means of a second articulation shaft (9b).

11. A welding gun in accordance with claim 10, **characterised in that** the base body (1) is coupled to a suspension system adapted to permit movements of the welding gun in the vertical direction and in at least one horizontal direction, and rotations of the welding gun about three orthogonal axes, at least one handle (15) being joined to the base body (1) for manual operation of the welding gun, said handle (15) being fitted with control members (16) for controlling welding and extra-opening operations.

12. A welding gun in accordance with any one of claims 1 to 9, **characterised in that** the passive arm (2) is mounted to pivot about a second pivot shaft (8) with respect to the base support (1), the first linear actuator (7) has a casing connected to the passive arm (2) by a first articulation shaft (7b), and the second linear actuator (9) has a casing connected to the passive arm (2) by a second articulation shaft (9b), and **in that** the welding gun includes a third linear actuator (10) having a rod connected to the passive arm (2) by means of a third articulation pin (10a) and a casing connected to the base support (1) by means of a third articulation shaft (10b), said third linear actuator (10) being operable to jointly pivot the passive arm (2) and the active arm (4) about said second pivot shaft (8) without altering the relative position therebetween.

13. A welding gun in accordance with claim 12, **characterised in that** the base body (1) is coupled to a moving member of a robot and the welding gun is connected to a control unit associated with said robot to execute an automatic welding gun operating program including positioning and welding operations.

## Patentansprüche

1. Elektrische Widerstandsschweißpistole mit folgenden miteinander verbundenen Teilen:
einem Bodenträger (1);
einem passiven Arm (2) mit einer ersten Elektrode (3), wobei der passive Arm (2) an dem Bodenträger (1) befestigt ist;
einem aktiven Arm (4) mit einer zweiten Elektrode (5), wobei der aktive Arm (4) so befestigt ist, dass er sich bezüglich des passiven Arms (2) um eine Drehachse (6) dreht;
einem ersten linearen Stellantrieb (7) mit einer ausfahrbaren Stange, die mit dem aktiven Arm (4) über einen ersten Gelenkstift (7a) verbunden ist, wobei der lineare Stellantrieb (7) zur Drehung des aktiven Arms (4) um die Drehachse (6) zwischen einer offenen und einer geschlossenen Stellung drehbar ist;
elektrischen Stromversorgungsmitteln, mit denen an die erste und zweite Elektrode (3, 5) bei geschlossener Stellung des aktiven Arms (4) ein Schweißstrom geliefert werden kann;
Führungsmitteln (20) zur Führung der Bewegung der Drehachse (6) bezüglich des passiven Arms (2) in einem gebogenen Wegverlauf mit einem Mittelpunkt an dem ersten Gelenkstift (7a) bei eingefahrener Stellung der ausfahrbaren Stange des ersten linearen Stellantriebs (7); sowie
einem zweiten linearen Stellantrieb (9) mit einer ausfahrbaren Stange, die mit dem aktiven Arm (4) über einen zweiten Gelenkstift (9a) verbunden ist, wobei der lineare Stellantrieb (9) zur Drehung des aktiven Arms (4) um den ersten Gelenkstift (7a) unter gleichzeitiger Bewegung der Drehachse (6) entlang der Führungsmittel (20) zwischen der offenen und der ganz offenen Stellung drehbar ist.

2. Schweißpistole nach Anspruch 1, **dadurch gekennzeichnet, dass** zumindest eine nahe Stellung des passiven Arms (2) bezüglich des Schweißpistolenkörpers durch zwei Platten (11) gebildet wird und die Führungsmittel (20) ein Paar Langlöcher (12) aufweisen, wobei die Langlöcher (12) jeweils in einer der ersten Platten (11) ausgebildet sind und die Langlöcher (12) jeweils einander gegenüber liegen und zur Aufnahme der darin einsetzbaren Enden der Drehachse (6) geeignet sind.

3. Schweißpistole nach Anspruch 2, **dadurch gekennzeichnet, dass** Lager (31) vorgesehen sind, die an den Enden der Drehachse (6) angebaut werden und an den Innenwänden der Langlöcher (12) entlang gleiten können.

4. Schweißpistole nach Anspruch 1, 2 oder 3, **dadurch gekennzeichnet, dass** Haltemittel vorgesehen sind, mit denen die Drehachse (6) in einer festen Stellung gehalten werden kann, die dazu geeignet ist, als Drehachse für die Drehung des aktiven Arms (4) zwischen der offenen und geschlossenen Stellung zu agieren.

5. Schweißpistole nach Anspruch 4, **dadurch gekennzeichnet, dass** die Haltemittel ein Paar Halteteile (13) aufweisen, wobei die Halteteile (13) jeweils in einem der Langlöcher (12) untergebracht werden können, wobei die Halteteile (13) jeweils ein erstes Ende (13a), das mit einem ersten Ende (12a) des entsprechenden Langlochs (12) in Kontakt treten kann, und ein Aufbau (13b) aufweisen, der mit einem zweiten Ende (12b) des Langlochs (12) zum Halten der Drehachse (6) in der festen Stellung in Wechselwirkung treten kann.

6. Schweißpistole nach Anspruch 5, **dadurch gekennzeichnet, dass** zwei Haltestellantriebe (14) mit einem an einer entsprechenden ersten Platte (11) befestigten Gehäuse sowie einer mit einem entsprechenden Halteteil (13) verbundenen ausfahrbaren Stange (14a) vorgesehen sind, wobei die Haltestellantriebe (14) zum Einführen der Halteteile (13) in die und Herausziehen aus den entsprechenden Langlöchern (12) betätigt werden können.

7. Schweißpistole nach Ansprüchen 2 bis 6, **dadurch gekennzeichnet, dass** die Langlöcher (12) in den jeweiligen Zusatzteilen (32) ausgebildet sind, die zumindest teilweise an die entsprechenden Öffnungen (33) in den ersten Platten (11) angebaut und an den ersten Platten (11) befestigt sind.

8. Schweißpistole nach Anspruch 7, **dadurch gekennzeichnet, dass** die Haltestellantriebe (14) jeweils ein Gehäuse aufweisen, das an einem der Zusatzteile (32) befestigt ist.

9. Schweißpistole nach Anspruch 1, **dadurch gekennzeichnet, dass** der zweite lineare Stellantrieb (9) einen Doppelstangenstellantrieb und eine zweite Stange (9c) aufweist, die der ersten ausfahrbaren und mit dem aktiven Arm (4) über den zweiten Gelenkstift (9a) verbundenen Stange gegenüber liegt, wobei an der zweiten Stange (9c) ein Anschlag (17) angebaut ist, wobei mit dem Anschlag (17) Regulierungsmittel zur Regulierung der Stellung des Anschlags (17) entlang der zweiten Stange (9c) zwecks Regulierung des maximalen Öffnungswinkels des aktiven Arms (4) in der ganz offenen Stellung verbunden sind.

10. Schweißpistole nach einem der Ansprüche 1 bis 9, **dadurch gekennzeichnet, dass** der passive Arm (2) bezüglich des Bodenträgers (1) fest angeordnet ist, der erste lineare Stellantrieb (7) ein mit dem Bodenträger (1) über eine erste Gelenkwelle (7b) verbundenes Gehäuse und der zweite lineare Stellantrieb (9) ein mit dem Bodenträger (1) bzw. dem passiven Arm (2) über eine zweite Gelenkwelle (9b) verbundenes Gehäuse aufweist.

11. Schweißpistole nach Anspruch 10, **dadurch gekennzeichnet, dass** der Bodenträgerkörper (1) an ein Aufhängungssystem gekoppelt ist, das Bewegungen der Schweißpistole in senkrechter Richtung und in mindestens einer horizontalen Richtung sowie Drehungen der Schweißpistole um drei orthogonale Achsen ermöglicht, wobei mindestens ein Griff (15) mit dem Bodenträgerkörper (1) zur Handbedienung der Schweißpistole verbunden ist, wobei der Griff (15) mit Steuergliedern (16) zur Steuerung des Schweißens und der Vorgänge zum ganz öffnen ausgestattet ist.

12. Schweißpistole nach einem der Ansprüche 1 bis 9, **dadurch gekennzeichnet, dass** der passive Arm (2) drehbar um eine zweite Drehachse (8) bezüglich des Bodenträgers (1) angeordnet ist, der erste lineare Stellantrieb (7) ein mit dem passiven Arm (2) über eine erste Gelenkwelle (7b) verbundenes Gehäuse und der zweite lineare Stellantrieb (9) ein mit dem passiven Arm (2) über eine zweite Gelenkwelle (9b) verbundenes Gehäuse aufweist, und die Schweißpistole einen dritten linearen Stellantrieb (10) mit einer mit dem passiven Arm (2) über einen dritten Gelenkstift (10a) verbundenen Stange und ein mit dem Bodenträger (1) über eine dritte Gelenkwelle (10b) verbundenes Gehäuse aufweist, wobei der dritte lineare Stellantrieb (10) zur gemeinsamen Drehung des passiven Arms (2) und des aktiven Arms (4) um die zweite Drehachse (8) ohne Änderung deren relativer Stellung zueinander drehbar ist.

13. Schweißpistole nach Anspruch 12, **dadurch gekennzeichnet, dass** der Bodenträgerkörper (1) an ein bewegliches Glied eines Roboters gekoppelt und die Schweißpistole mit einem Steuergerät verbunden ist, das mit dem Roboter zur Durchführung eines automatischen Schweißpistolenbetriebprogramms mit Positionier- und Schweißvorgängen verbunden ist.

## Revendications

1. Pistolet pour soudage à résistance électrique comportant combinés:
un support base (1);
un bras passif (2) soutenant un premier électrode (3), ce bras passif (2) étant monté sur ce support base (1);
un bras actif (4) soutenant un deuxième électrode (5), ce bras actif (4) étant monté pour pivoter sur un essieu pivotant (6) par rapport au bras passif (2);
un premier servomoteur à déplacement linéaire (7) ayant une tige extensible reliée au bras actif (4) au moyen d'un premier axe d'articulation (7a), ce servomoteur à déplacement linéaire (7) pouvant fonctionner pour pivoter le bras actif (4) autour de cet essieu pivotant (6) entre une position ouverte et une position fermée;
des moyens d'alimentation en courant électrique adaptés pour fournir un courant de soudage aux premier et deuxième électrodes (3,5) lorsque le bras actif (4) est dans cette positon fermée;
des moyens de guidage (20) pour guider le mouvement de l'essieu pivotant (6) par rapport au bras passif (2) dans une trajet courbé ayant un centre à ce premier axe d'articulation (7a) lorsque cette tige extensible du premier servomoteur à déplacement linéaire (7) est replié; et
un deuxième servomoteur à déplacement linéaire (9) ayant une tige extensible reliée au bras actif (4) au moyen d'un deuxième essieu d'articulation (9a), ce servomoteur à déplacement linéaire (9) pouvant fonctionner pour pivoter le bras actif (4) autour de ce premier axe d'articulation (7a) tout en déplaçant l'essieu pivotant (6) le long de ces moyens de guidage (20) entre cette position ouverte et une position extra-ouverte.

2. Un pistolet pour soudage conformément à la revendication 1, **caractérisé en ce qu'**au moins une portion proximale du bras passif (2) par rapport au corps de pistolet de soudage est formé par deux premières plaques (11) et ce moyen de guidage (20) comporte une paire de trous oblongs (12), chaque trou oblong (12) étant formé dans une de ces premières plaques (11), les trous oblongs (12) se faisant mutuellement face et adaptés pour recevoir des extrémités de l'essieu pivotant (6) qui y est engagé.

3. Un pistolet pour soudage conformément à la revendication 2, **caractérisé en ce que** des coussinets (31) sont installés à ces extrémités de l'essieu pivotant (6) et adaptés pour tourner sur des parois internes de ces trous oblongs (12).

4. Un pistolet pour soudage conformément à la revendication 1, 2 ou 3, **caractérisé en ce qu'**il possède des moyens de rétention adaptés pour retenir l'essieu pivotant (6) dans une position fixe appropriée pour agir comme essieu de pivotage pour pivoter le bras actif (4) entre les positions ouverte et fermée.

5. Pistolet pour soudage conformément à la revendication 4, **caractérisé en ce que** ces moyens de rétention comportent une paire de pièces de fixation (13), chacune de ces pièces de fixation (13) étant adaptée pour être logée à l'intérieur des trous oblongs (12), chaque pièce de fixation (13) comportant une première extrémité (13a) adaptée pour établir un contact avec une première extrémité (12a) du trou oblong correspondant (12) et une configuration (13b) adaptée pour coopérer avec une deuxième extrémité (12b) du trou oblong (12) en retenant l'essieu pivotant (6) dans cette position fixe.

6. Un pistolet pour soudure conformément à la revendication 5, **caractérisée en ce qu'**il possède deux servomoteurs de rétention (14), chaque servomoteur de rétention (14) ayant un boîtier fixé à une des premières plaques correspondantes (11) et une tige extensible (14a) reliée à une des pièces de rétention (13) correspondante, ces servomoteurs de rétention (14) pouvant fonctionner pour engager ces pièces de rétention (13) dans les trous oblongs correspondants (12) et pour les retirer de là.

7. Un pistolet pour soudage conformément aux revendications 2 à 6, **caractérisé en ce que** ces trous oblongs (12) sont formés dans des pièces supplémentaires respectives (32) engagées, au moins en partie, dans des ouvertures correspondantes (33) dans les premières plaques (11) et fixées au moins en partie dans des ouvertures correspondantes (33) dans les première plaques (11) et fixées à ces premières plaques (11).

8. Un pistolet pour soudage conformément à la revendication 7, **caractérisé en ce que** chacun de ces servomoteurs de rétention (14) possède un boîtier fixé à une de ces pièces supplémentaires (32).

9. Un pistolet pour soudage conformément à la revendication 1, **caractérisée en ce que** ce deuxième servomoteur à déplacement linéaire (9) possède un servomoteur du type à double tige et comporte une deuxième tige (9c) en face de cette tige extensible reliée au bras actif (4) par ce deuxième essieu d'articulation (9a), une butée (17) étant montée sur cette deuxième tige (9c), des moyens de régulation étant associés à cette butée (17) pour régler la position de la butée (17) le long de la deuxième tige (9c) afin de régler l'angle d'ouverture maximale pour le bras actif (4) dans cette position extra-ouverte.

10. Un pistolet pour soudage conformément à une quelconque des revendications 1 à 9, **caractérisé en ce que** le bras passif (2) est fixé par rapport au support base (1), le premier servomoteur à déplacement linéaire (7) possède un boîtier relié à la base support (1) au moyen d'un premier essieu d'articulation (7b) et le deuxième servomoteur à déplacement linéaire (9) possède un boîtier relié au support base (1) ou au bras passif (2) au moyen d'un deuxième essieu d'articulation (9b).

11. Un pistolet pour soudage conformément à la revendication 10, **caractérisé en ce que** le corps de base (1) est couplé à un système de suspension adapté pour permettre les mouvements du pistolet de soudage dans la direction verticale et dans au moins une direction horizontale, et des rotations du pistolet pour soudage autour de trois axes orthogonaux, au moins un manche (15) étant relié au corps de base (1) pour le fonctionnement manuel du pistolet de soudage, ce manche (15) étant pourvu de membres de contrôle (16) pour contrôler les opérations de soudage et d'extra-ouverture.

12. Un pistolet pour soudage conformément à une des revendications 1 à 9, **caractérisé en ce que** le bras passif (2) est monté pour pivoter autour d'un deuxième essieu pivotant (8) par rapport au support de base (1), le premier servomoteur à déplacement linéaire (7) possède un boîtier relié au bras passif (2) par un premier essieu d'articulation (7b) et le deuxième servomoteur à déplacement linéaire (9) possède un boîtier relié au bras passif (2) par une deuxième essieu d'articulation (9b) et **en ce que** le pistolet de soudage comporte une troisième servomoteur à déplacement linéaire (10) ayant une tige reliée au bras passif (2) au moyen d'un troisième axe d'articulation (10a) et un boîtier relié au support base (1) au moyen d'un troisième essieu d'articulation (10b), ce troisième servomoteur à déplacement linéaire (10) pouvant fonctionner pour pivoter en même temps le bras passif (2) et le bras actif (4) autour ce deuxième essieu pivotant (8) sans avoir à changer la position relative entre eux.

13. Un pistolet pour soudage conformément à la revendication 12, **caractérisé en ce que** le corps de base (1) est couplé à un membre mobile d'un robot et le pistolet pour soudage est relié à une unité de contrôle associée à ce robot pour effectuer un programme de fonctionnement du pistolet pour soudage automatique comportant les opérations de positionnement et de soudage.
